# EUROPÄISCHE PATENTSCHRIFT

(11) **EP 4 164 924 B1**
(45) Veröffentlichungstag und Bekanntmachung des Hinweises auf die Patenterteilung: **30.07.2025**
(21) Anmeldenummer: 21731063.0
(22) Anmeldetag: 31.05.2021
(51) Int. Cl.: B60R 16/03, H02J 7/00, H02J 7/14, H02J 7/34

(54) **KRAFTFAHRZEUGBORDNETZSCHALTER, KRAFTFAHRZEUGBORDNETZ UND VERFAHREN ZUM BETREIBEN EINES KRAFTFAHRZEUGBORDNETZSCHALTERS**
MOTOR VEHICLE ONBOARD ELECTRICAL SYSTEM SWITCH, MOTOR VEHICLE ONBOARD ELECTRICAL SYSTEM AND METHOD FOR OPERATING A MOTOR VEHICLE ONBOARD ELECTRICAL SYSTEM SWITCH
COMMUTATEUR DE SYSTÈME ÉLECTRIQUE EMBARQUÉ DE VÉHICULE AUTOMOBILE, SYSTÈME ÉLECTRIQUE EMBARQUÉ DE VÉHICULE AUTOMOBILE ET PROCÉDÉ D'ACTIONNEMENT D'UN COMMUTATEUR DE SYSTÈME ÉLECTRIQUE EMBARQUÉ DE VÉHICULE AUTOMOBILE

(30) Priorität: 10.06.2020 DE 102020115461
(43) Veröffentlichungstag der Anmeldung: 19.04.2023
(73) Patentinhaber: Auto-Kabel Management GmbH, 79688 Hausen i.W. (DE)
(72) Erfinder: CACCIATORE, David, 47906 Kempen (DE); TAZARINE, Wacim, 41812 Erkelenz (DE)
(74) Vertreter: Cohausz & Florack
(86) Internationale Anmeldenummer: PCT/EP2021/064482
(87) Internationale Veröffentlichungsnummer: WO 2021/249799

(56) Entgegenhaltungen:
- EP-A1- 2 624 399
- EP-A1- 3 792 116
- WO-A1-2016/045836
- DE-A1- 102015 222 545
- DE-A1- 102016 101 081

## Beschreibung

Der Gegenstand betrifft ein Kraftfahrzeugbordnetzschalter, ein Kraftfahrzeugbordnetz mit einem solchen Schalter sowie ein Verfahren zum Betreiben eines Kraftfahrzeugbordnetzschalters.

Die zunehmende Automatisierung und Autonomisierung des Fahrens von Automobilen führt zu erhöhten Sicherheitsanforderungen an die elektrischen Verbraucher. Sicherheitsanforderungen spielen auch bei der zunehmenden Elektrifizierung des Antriebsstrangs eine immer wichtigere Rolle.

Sicherheitsrelevante Verbraucher wie Bremssysteme, Lenksysteme, optische und/oder radarbasierte Umgebungssensoren (LIDAR), Steuereinheiten und dergleichen müssen dauerhaft stabil mit elektrischer Energie versorgt werden, um ein sicheres automatisiertes und/oder autonomes Fahren zu ermöglichen.

Hierfür wird bereits vorgeschlagen, zumindest zwei Bordnetzenergieversorgungen vorzusehen. Diese Bordnetzenergieversorgungen können redundant die sicherheitsrelevanten Verbraucher mit elektrischer Energie versorgen. Dabei kann eine Bordnetzenergieversorgung beispielsweise eine herkömmliche Blei-Säure-Batterie, eine Lithium-Ionen-Batterie, eine Bremsstoffzelle oder dergleichen sein. Auch kann eine Bordnetzenergieversorgung ein Generator sein, der beispielsweise bei Verbrennungsmotoren als Lichtmaschine im Einsatz ist.

Trotz der redundanten Versorgung der sicherheitsrelevanten Verbraucher durch zwei Bordnetzenergieversorgungen kann es jedoch zu Problemen bei Spannungseinbrüchen im Bordnetz, welches an einer der Bordnetzenergieversorgungen angeschlossen ist, kommen. Ein Spannungseinbruch an einer der Bordnetzenergieversorgungen führt auch zu einem Spannungseinbruch an den sicherheitsrelevanten Verbrauchern, trotz Verbindung mit der zweiten, redundanten Bordnetzenergieversorgung. Es ist gefordert, dass ein Spannungseinbruch unter eine Grenze, beispielsweise 9V, nur für eine bestimmte Zeit, beispielsweise nur bis zu 0,5ms, auftreten darf, danach muss die Spannung wieder oberhalb einer Grenze, beispielsweise der genannten 9V, liegen.

Die Veröffentlichung WO 2016/045836 A1 betrifft ein Bordnetz, insbesondere ein elektrisches Bordnetz, für ein Kraftfahrzeug mit mehreren Verbrauchern und ein Verfahren zum Versorgen von Verbrauchern in einem Bordnetz eines Kraftfahrzeugs.

Ausgehend von diesem Stand der Technik lag dem Gegenstand die Aufgabe zugrunde, einen Kraftfahrzeugbordnetzschalter zur Verfügung zu stellen, welcher eine stabile Verbindung von Bordnetzenergieversorgungen mit sicherheitsrelevanten Verbrauchern gewährleistet.

Diese Aufgabe wird durch einen Kraftfahrzeugbordnetzschalter nach Anspruch 1, ein Kraftfahrzeugbordnetz nach Anspruch 14 sowie ein Verfahren nach Anspruch 15 gelöst.

Ein gegenständlicher Kraftfahrzeugbordnetzschalter umfasst zumindest zwei Eingänge. Die Eingänge können als Anschlusslaschen, Crimpanschlüsse, Anschlussbolzen, Anschlussfahnen, Lötfahnen oder dergleichen gebildet sein. Die Eingänge können in ein gemeinsames Gehäuse geführt sein. Die Eingänge können aus Aluminium oder Aluminiumlegierung als auch Kupfer oder Kupferlegierung gebildet sein.

An die Eingänge lässt sich gegenständlich jeweils eine von zwei Bordnetzenergieversorgungen anschließen. Die Bordnetzenergieversorgungen können wie einleitend bereits erläutert gebildet sein. Die Bordnetzenergieversorgungen sind dabei bevorzugt jeweils parallel mit den Eingängen und weiteren Verbrauchern verbunden. Es ist möglich, dass eine Bordnetzenergieversorgung exklusiv für einen oder mehrere sicherheitsrelevante Verbraucher ist und über den gegenständlichen Kraftfahrzeugbordnetzschalter mit diesen verbunden ist. Es ist jedoch auch möglich, dass zumindest eine der Bordnetzenergieversorgungen weitere Verbraucher, die insbesondere nicht sicherheitsrelevant sind, versorgt. Somit kann an den Eingängen exklusiv eine Bordnetzenergieversorgung und/oder eine Bordnetzenergieversorgung und weitere Verbraucher elektrisch kontaktiert sein.

Die Bordnetzenergieversorgungen können Batterien, Akkumulatoren, Supercaps, Generatoren, Brennstoffzellen oder dergleichen sein. Bei den Batterien oder Akkumulatoren kommen insbesondere Blei-Säure-Batterien oder Lithium-Ionen-Batterien zum Einsatz. Zumindest eine der Bordnetzenergieversorgungen kann unmittelbar über ein elektrisches Kabel mit einem Eingang kurzgeschlossen sein. Zumindest eine der Bordnetzenergieversorgungen kann über einen AC/DC Gleichrichter oder über einen DC/DC Umrichter mit einem der Eingänge verbunden sein.

An dem Kraftfahrzeugbordnetzschalter kann darüber hinaus ein Ausgang für einen Verbraucher, insbesondere einen sicherheitsrelevanten Verbraucher, des Kraftfahrzeugs vorgesehen sein. Mechanisch kann der Ausgang entsprechend der obigen Beschreibung zu den Eingängen gebildet sein. Auch der Ausgang kann in das gemeinsame Gehäuse geführt sein.

An dem Ausgang kann einer oder eine Mehrzahl von Verbrauchern, insbesondere sicherheitsrelevante Verbraucher, angeschlossen sein. Die Verbraucher können beispielsweise die eingangs genannten Verbraucher sein. Die sicherheitsrelevanten Verbraucher benötigen eine Eingangsspannung über einem Grenzwert, z.B. größer 9V, und sind dazu ausgelegt, Spannungseinbrüche unter diesen Grenzwert für eine bestimmte Zeit, beispielsweise maximal 0,5ms, zu verkraften. Bei längeren Spannungseinbrüchen unter den Grenzwert kann es zu Fehlfunktionen der sicherheitsrelevanten Verbraucher kommen. Solche Fehlfunktionen sind beim automatisierten/autonomen Fahren inakzeptabel und nicht zulässig.

Innerhalb des Kraftfahrzeugbordnetzschalters, beispielsweise durch ein gemeinsamen Gehäuse umschlossen, insbesondere auch in einem gemeinsamen Gehäuse eingegossen, insbesondere als integrierter Schaltkreis, können zwei Schalter vorgesehen sein. Die Schalter dienen zum Schalten einer jeweiligen elektrischen Verbindung zwischen jeweils einem Eingang und einen gemeinsamen Knotenpunkt des Kraftfahrzeugbordnetzschalters.

Ein erster kann Schalter zwischen dem ersten Eingang und dem gemeinsamen Knotenpunkt angeordnet sein. Neben dem ersten Schalter kann ein zweiter Schalter zwischen dem zweiten der Eingänge und dem gemeinsamen Knotenpunkt angeordnet sein.

Zumindest einer der Schalter ist beispielsweise ein Normally Open Schalter, der bei Anliegen einer entsprechenden Steuerspannung geschlossen ist. Zumindest einer der Schalter kann aber auch ein Normally Closed Schalter sein, der durch Anlegen einer Spannung geöffnet wird.

Die Schalter stellen eine jeweilige elektrische Verbindung zwischen dem jeweiligen Eingang und dem gemeinsamen Knotenpunkt her. Der gemeinsame Knotenpunkt ist mit dem Ausgang verbunden. Am Ausgang kann das Potential des gemeinsamen Knotenpunkts abgegriffen werden.

Im Normalbetrieb fließt elektrische Energie über den ersten und/oder zweiten Schalter von einer jeweiligen Bordnetzenergieversorgung zu dem Knotenpunkt, von dort über den Ausgang zu dem zumindest einen Verbrauchern. Dabei fließt in der Regel die elektrische Energie von der Bordnetzenergieversorgung mit dem höheren elektrischen Potential gegenüber Masse zu dem zumindest einen Verbraucher.

Durch die im Normalbetrieb geschlossenen Schalter kann es zu Ausgleichsströmen zwischen den Bordnetzenergieversorgungen kommen. Gerade diese Ausgleichsströme sind im Falle eines Fehlers auf Seiten einer der Bordnetzenergieversorgungen kritisch und müssen verhindert werden, wie nachfolgend noch beschrieben werden wird.

Für ein besonders schnelles Ansprechverhalten als auch eine kleinbauende Gestaltung sowie für die Gewährleistung der notwendigen Energie im Fehlerfall wird vorgeschlagen, dass die Schalter als Halbleiterschalter gebildet sind und jeweils mit ihren Bodydioden in Durchlassrichtung hin zum gemeinsamen Knotenpunkt geschaltet sind. Das bedeutet, dass in einem Verbraucher-Zählpfeilsystem elektrische Energie von einer jeweiligen Bordnetzenergieversorgung über die Bodydioden zu dem gemeinsamen Knotenpunkt fließen kann. Insbesondere ist eine Stromflussrichtung von dem Eingang in Richtung des gemeinsamen Knotenpunkts möglich. Da beide Bodydioden jeweils in Durchlassrichtung hin zum gemeinsamen Knotenpunkt geschaltet sind, sind Stromflüsse im Verbraucher-Zählpfeilsystem von dem Knotenpunkt über die Bodydiode hin zu dem Eingang unmöglich. Somit isolieren die Bodydioden die beiden Bordnetzenergieversorgungen bei geöffneten Schaltern voneinander. Beim geschlossenen Schalter fließt der Strom unmittelbar über den Schalter und nur ein nicht relevanter Bruchteil fließt über die Bodydioden. Bei geöffnetem Schalter fließt gegebenenfalls ein Strom in Stromflussrichtung vom Eingang zum gemeinsamen Knotenpunkt über die Bodydioden, wobei hier ein Spannungsabfall von beispielsweise 0,7V möglich ist.

Zur Absicherung sicherheitsrelevanter Verbraucher wird nun vorgeschlagen, dass mit Hilfe einer Überwachungsschaltung eine erste Spannung an dem ersten Eingang und eine zweite Spannung an dem zweiten Eingang und/oder eine Spannung an dem gemeinsamen Knotenpunkt überwacht wird. Die Überwachungsschaltung misst dabei insbesondere das Potential gegenüber Masse an dem ersten und/oder dem zweiten Eingang und/oder dem gemeinsamen Knotenpunkt. Wenn nachfolgend von einer Spannungsmessung die Rede ist, so kann diese an zumindest einem der genannten Punkt gemessen sein.

Der gegenständliche Kraftfahrzeugbordnetzschalter wird insbesondere auf dem Batteriepluspol, also High Side angeschlossen, so dass ein positives Potential gegenüber Masse durch die Überwachungsschaltung erfasst werden kann. Wie zuvor bereits erläutert, ist für sicherheitsrelevante Verbraucher eine Spannung über einem Grenzwert, beispielsweise 9V, nahezu zwingend erforderlich. Ein Spannungseinbruch unterhalb dieser Grenze über eine zu lange Zeit führt zu Fehlfunktionen dieser Verbraucher.

Die beiden Bordnetzenergieversorgungen versorgen über den Kraftfahrzeugbordnetzschalter den zumindest einen Verbraucher mit einer Bordnetzspannung, die beispielsweise 12V, 24V oder 48V ist, wobei andere Spannungswege ebenfalls möglich sind. Die Spannungen der beiden Bordnetzenergieversorgungen sind insbesondere nahezu gleich.

Im Normalbetrieb sind die Schalter geschlossen. Über die geschlossenen Schalter kann Strom von den Eingängen zu dem Ausgang, von dem Ausgang zu den Eingängen, als auch zwischen den Eingängen fließen. Die Schalter stellen nahezu Kurzschlüsse zwischen den Eingängen und dem Ausgang dar. Das führt dazu, dass bei einer zu niedrigen Spannung einer der beiden Bordnetzenergieversorgungen ein Ausgleichsstrom von der Bordnetzenergieversorgung mit der höheren Spannung zu der Bordnetzversorgung mit der niedrigeren Spannung fließt. Solche Ausgleichsströme fließen zusätzlich zu den Strömen von der Bordnetzenergieversorgungen der höheren Spannung zum Verbraucher. Dies ist unkritisch, so lange das Potential der Bordnetzenergieversorgung mit der geringeren Spannung hoch genug ist.

Bei einem kritischen Spannungseinbruch einer der Bordnetzenergieversorgungen oder des daran angeschlossenen Bordnetzes, beispielsweise unterhalb des Grenzwertes, beispielsweise 9V, kommt es zu Ausgleichsströmen über die geschlossenen Schalter, die zu einem entsprechenden Spannungseinbruch an der Bordnetzenergieversorgung und dem Bordnetz führen können, an den ursprünglich kein Fehler aufgetreten war. Die Ausgleichsströme führen daher zu einem Spannungseinbruch an dem Ausgang, obwohl eine der Bordnetzenergieversorgungen korrekt funktioniert.

Um dies zu verhindern, wird nun vorgeschlagen, dass abhängig von einem Betrag zumindest einer der überwachten Spannungen ein Öffnungssignal zum gleichzeitigen Öffnen beider Schalter bewirkt wird. Das heißt, in einem Fehlerfall, wenn ein Spannungseinbruch auf Seiten einer der beiden Eingänge auftritt, werden beide Schalter unmittelbar und gleichzeitig geöffnet.

Einen Spannungseinbruch als solchen zu detektieren ist einfach und schnell. Es ist beispielsweise lediglich notwendig, an dem gemeinsamen Knotenpunkt das Potential zu messen. Eine einfache Spannungsmessung ist in sehr kurzer Zeit möglich. Durch die schnelle Reaktionszeit, also das schnelle Messen des Spannungseinbruchs, kann ein schnelles Öffnen der Schalter bewirkt werden.

Insbesondere liegt die Reaktionszeit zwischen dem Detektieren des Spannungseinbruchs und dem Öffnen der Schalter unterhalb der für die Verbraucher kritischen Grenze, während derer die Spannung unter dem Grenzwert fallen darf. Diese Zeit ist beispielsweise kleiner 0,5ms. D.h., dass mit der gegenständlichen Schaltung ein Spannungseinbruch unter dem Grenzwert auf eine Dauer begrenzt werden kann, die kürzer ist, als die für die Verbraucher maximal zulässige Dauer.

Durch das Öffnen beider Schalter würde bei herkömmlichen Schaltungen die Energieversorgung des Verbrauchers ebenfalls unterbrochen. Dies ist gegenständlich dadurch verhindert, dass die gegenläufig geschalteten Bodydioden in Durchlassöffnung hin zum gemeinsamen Knotenpunkt weiter eine Energieversorgung ermöglichen. Von der Bordnetzenergieversorgung und dem Bordnetz, in dem kein Fehler ist, fließt weiterhin ein Strom vom Eingang über die Bodydiode zu dem gemeinsamen Knotenpunkt und den Ausgang bzw. den Verbraucher. Ausgleichsströme werden jedoch durch die jeweils andere Bodydiode verhindert.

Durch die gegenständliche Schaltung wird erreicht, dass in dem Moment, in dem ein Fehler auftritt, die beiden Bordnetzenergieversorgungen voneinander getrennt werden und Ausgleichsströme verhindert werden, wobei gleichzeitig eine Energieversorgung der Verbraucher mit im Wesentlichen stabiler Spannung am Ausgang sichergestellt bleibt.

Durch die sichergestellte Energieversorgung mit im Wesentlichen stabiler Spannung über die Bodydioden kann anschließend überprüft werden, in welchen der beiden Bordnetze tatsächlich der Fehler aufgetreten ist. Diese Überprüfung kann länger dauern, als das einfache Messen des Spannungspegels. Da aber der Verbraucher mit Energie mit im Wesentlichen stabiler Spannung versorgt bleibt, kann auch eine längere Zeit hierfür genutzt werden.

Sobald festgestellt wurde, welches der beiden Bordnetze bzw. welche der beiden Bordnetzenergieversorgungen für den Spannungseinbruch gesorgt haben, kann der jeweils andere Schalter bzw. die jeweils andere Verbindung zu der Bordnetzenergieversorgung wieder geschlossen werden und der Verbraucher wird über die intakte Bordnetzenergieversorgung mit Energie mit im stabiler Spannung versorgt.

Durch das Schließen des Schalters wird die Bodydiode entlastet. Die Bodydiode ist dazu ausgelegt, nur für eine gewisse Zeit einen hohen Betriebsstrom zu tragen. Über die Bodydiode tritt ein Spannungsverlust von 0,7V auf und die Verlustleistung führt zu einer Erwärmung des Schalters. Daher muss der Schalter geschlossen werden, um eine Zerstörung des Schalters bzw. der Bodydiode zu verhindern.

Gemäß einem Ausführungsbeispiel wird vorgeschlagen, dass die Überwachungsschaltung bei einem Unterschreiten zumindest einer der Spannungen unter einem Grenzwert das Öffnungssignal bewirkt. Wie bereits erläutert, wird der gegenständliche Kraftfahrzeugbordnetzschalter bevorzugt High Side der Batterie angeschlossen, so dass ein Fehler durch einen Spannungseinbruch bedingt ist. Dieser Spannungseinbruch unter einem Grenzwert, beispielsweise 9V, kann detektiert werden, beispielsweise unmittelbar an dem Knotenpunkt. Wenn der Spannungseinbruch detektiert wurde, wird das Öffnungssignal ausgegeben, so dass Ausgleichsströme unmittelbar unterbunden werden.

Gemäß einem Ausführungsbeispiel wird vorgeschlagen, dass die Überwachungsschaltung bei einem Kurzschluss an zumindest einem der Eingänge das Öffnungssignal bewirkt. Ein möglicher Grund für einen Spannungseinbruch kann ein Kurzschluss sein. Bei einem Kurzschluss bricht die Spannung sehr rapide mit einer steilen Flanke ein. Über den Kurzschluss fließt sowohl der Strom der Energieversorgung, die an dem Bordnetz angeschlossen ist, an der der Kurzschluss auftritt, als auch der Strom der Bordnetzenergieversorgung, die auf der anderen Seite des Kraftfahrzeugbordnetzschalters, mit dem intakten Bordnetz, verbunden ist, wobei dieser Strom über die beiden Schalter in der Art eines Ausgleichsstroms fließt. Der Kurzschluss schließt auch den Verbraucher kurz, so dass dieser nicht mehr mit Energie und/oder im Wesentlichen stabiler Spannung versorgt wird.

Durch das gleichzeitige Öffnen der Schalter unmittelbar nach dem Detektieren des Kurzschlusses wird dieser Ausgleichsstrom verhindert und der Verbraucher "sieht" den Kurzschluss nicht mehr. Auch die Bordnetzenergieversorgung des intakten Bordnetzes "sieht" den Kurzschluss nicht mehr, da die Bodydiode zum Kurzschluss hin in Sperrrichtung geschaltet ist.

Gemäß einem Ausführungsbeispiel wird vorgeschlagen, dass die Überwachungsschaltung zumindest eine der Spannungen mit einem Vergleichspotential, insbesondere einem Massepotential vergleicht. Die Überwachungsschaltung misst die Spannung gegenüber dem Massepotential. Bei einem Spannungseinbruch an einem der Eingänge tritt dieser Spannungseinbruch auch an dem anderen Eingang und dem Knotenpunkt auf, da die beiden Eingänge über die geschlossenen Schalter und den Knotenpunkt miteinander kurzgeschlossen sind. Um dann Ausgleichsströme zu verhindern, werden die Schalter unmittelbar geöffnet.

Gemäß einem Ausführungsbeispiel wird vorgeschlagen, dass die Überwachungsschaltung unmittelbar nach dem Bewirken des Öffnungssignals einen jeweiligen Zustand zumindest eines Teils des Bordnetzes an dem ersten Eingang und zumindest eines Teils des Bordnetzes an dem zweiten Eingang überprüft und abhängig von der Überprüfung ein Schließsignal für genau einen, bevorzugt nur den ersten oder nur den zweiten Schalter bewirkt. Das Schließsignal wird für nur genau einen der beiden Schalter bewirkt. Das Schließsignal wird für denjenigen Schalter bewirkt, der an dem Eingang angeschlossen ist, an dem das Bordnetz fehlerfrei ist. Der Schalter, der an dem Eingang liegt, an dem das Bordnetz fehlerhaft ist, bleibt geöffnet.

Gemäß einem Ausführungsbeispiel wird vorgeschlagen, dass die Überwachungsschaltung eine Netzimpedanz und/oder eine Spannung und/oder eine Impulsantwort an dem Teil des Bordnetzes an dem ersten Eingang und dem Teil des Bordnetzes an dem zweiten Eingang überprüft. Dabei kann z.B. Spannung an dem ersten Eingang und/oder an dem zweiten Eingang und/oder dem Knotenpunkt gemessen. Zusätzlich kann der Strom sowie die Stromflussrichtung an dem ersten Eingang und/oder an dem zweiten Eingang und/oder dem Knotenpunkt gemessen werden. Die Messwerte können einen AD Wandler digitalisiert werden und in einem Prozessor verarbeitet werden. Abhängig von der Verarbeitung kann die Überwachungsschaltung das Schließsignal ausgeben.

Um Missverständnisse zu vermeiden, sei angemerkt, dass der Teil des Bordnetzes an dem ersten Eingang und der Teil des Bordnetzes an dem zweiten Eingang jeweils so zu verstehen ist, dass dies zumindest die Verbindung des Eingangs mit der jeweiligen Bordnetzenergieversorgung umfasst. Darüber hinaus kann eine Verbindung mit zumindest einem, vorzugsweise mehreren weiteren Verbrauchern, die an der jeweiligen Bordnetzenergieversorgung angeschlossen sind, gemeint sein. Ein Teil eines Bordnetzes kann somit aus der Bordnetzenergieversorgung und/oder daran angeschlossenen Verbrauchern gebildet sein.

Gemäß einem Ausführungsbeispiel wird vorgeschlagen, dass die Halbleiter-Schalter derart dimensioniert sind, dass ein Spannungsabfall an einer jeweiligen Bodydiode nach dem Öffnen des Schalters kleiner 1V, bevorzugt kleiner 0,7V ist. Über die Bodydiode fließt weiterhin ein Strom beim geöffneten Schalter in Durchlassrichtung von der intakten Bordnetzenergieversorgung hin zu dem Verbraucher. Dieser Strom bewirkt ein Spannungsabfall von bevorzugt 1V, insbesondere 0,7V oder weniger über die Bodydiode. Dieser Spannungsabfall ist jedoch unkritisch für den sicherheitsrelevanten Verbraucher, da die Spannung der Bordnetzenergieversorgung abzüglich des Spannungsabfalls über die Bodydiode größer ist, als die Mindestspannung für den Verbraucher, insbesondere den sicherheitsrelevanten Verbraucher.

Gemäß einem Ausführungsbeispiel wird vorgeschlagen, dass die Überwachungsschaltung innerhalb von 100ms, bevorzugt 40ms nach dem Öffnungssignal das Schließsignal bewirkt. Die Überwachungsschaltung hat somit zwischen 40 und 100ms Zeit, die beiden Teile der beiden Bordnetze jenseits der beiden Eingänge zu überprüfen und festzustellen, auf welcher Seite der Fehler, insbesondere der Kurzschluss aufgetreten ist, der zu dem Spannungseinbruch geführt hat. Wird die richtige Seite detektiert, an der der Fehler aufgetreten ist, wird die jeweils andere Seite durch Schließen des Schalters mit dem Verbraucher verbunden.

Gemäß einem Ausführungsbeispiel wird vorgeschlagen, dass nach dem Öffnen der Schalter der Ausgang über die jeweilige Bodydioden mit dem ersten und dem zweiten Eingang leitend verbunden ist und die Bodydioden ein Stromfluss von dem jeweiligen Eingang zu dem Ausgang ermöglichen. Wie bereits erläutert, wird ein Stromfluss im Verbraucher-Zählpfeilsystem von der Bordnetzenergieversorgung zu dem Ausgang ermöglicht. Die Bodydioden sperren jedoch einen Stromfluss von dem höheren Potential zu dem niedrigeren Potential im Verbraucher-Zählpfeilsystem. Das verhindert einen Ausgleichstrom zwischen dem Bordnetz, welches intakt ist und dem Bordnetz, welches fehlerhaft ist und den Spannungseinbruch bewirkt hat. Da zum Zeitpunkt des Spannungseinbruchs noch nicht klar ist, welches der beiden Bordnetze den Spannungseinbruch bewirkt hat, werden beide Schalter geöffnet. Eine Energieversorgung des Verbrauchers an dem Ausgang mit einer im Wesentlichen stabilen Spannung bleibt jedoch über die Bodydioden sichergestellt.

Gemäß einem Ausführungsbeispiel wird vorgeschlagen, dass nach dem Öffnen der Schalter der Ausgang über die jeweiligen Bodydioden mit dem ersten und dem zweiten Eingang leitend verbunden ist, die Bodydioden jedoch einen Stromfluss von dem Ausgang zu dem jeweiligen Eingang sperren. Somit ist auch ein Stromfluss von dem gemeinsamen Knotenpunkt zu dem Eingang durch die Bodydioden gesperrt.

Gemäß einem Ausführungsbeispiel wird vorgeschlagen, dass zumindest einer der Halbleiterschalter mit einer variablen Schaltkennlinie geschaltet ist, insbesondere dass die Schaltkennlinie abhängig von einer Last an dem Ausgang ist. Dabei ist das Schaltverhalten des Halbleiterschalters, insbesondere ein Abhängigkeit vom Strom und/oder der Spannung softwaremäßig einstellbar. Ein dynamischer Verbraucher, der z.B. beim Anlaufen einen hohen Anlaufstrom hat und im Normalbetrieb einen geringeren Strom benötigt, kann auch variable abgesichert werden, in dem die Schaltkennlinie, z.B. wieviel Strom wie lange fließt (dI/dt) flexibel definiert wird.

Wie bereits eingangs erläutert, kann an dem Ausgang gemäß einem Ausführungsbeispiel ein oben genannter sicherheitsrelevanter Verbraucher angeschlossen sein. Gerade für die sicherheitsrelevanten Verbraucher ist eine durchgängige Stromversorgung in einer redundanten Art und Weise sicherzustellen.

Gemäß einem Ausführungsbeispiel wird vorgeschlagen, dass der Ausgang mit dem gemeinsamen Knotenpunkt kurzgeschlossen ist. In dem Bordnetzschalter ist zwischen den gemeinsamen Knotenpunkt und dem Ausgang bevorzugt kein weiteres Bauelement vorgesehen.

Ein weiterer Aspekt ist ein Kraftfahrzeugbordnetz mit einem Kraftfahrzeugbordnetzschalter wie er zuvor beschrieben wurde, mit einer ersten mit dem ersten Eingang verbundenen Bordnetzenergieversorgung, mit einer zweiten mit dem zweiten Eingang verbundenen Bordnetzenergieversorgung und mit einem mit dem Ausgang verbundenen, sicherheitsrelevanten Verbraucher.

Ein weiterer Aspekt ist ein Verfahren zum Betreiben eines Kraftfahrzeugbordnetzschalters, wie er zuvor beschrieben wurde. Dabei wird zumindest eine Spannung überwacht. Hierunter ist insbesondere auch zu verstehen, dass eine Spannung an einem gemeinsamen Knotenpunkt überwacht wird. Bei geschlossenen Schaltern sind die Spannungen an den Eingängen und dem gemeinsamen Knotenpunkt nahezu identisch und unterscheiden sich nur durch den Spannungsabfall über die jeweiligen Schalter, wobei dieser im Bereich von wenigen 100mV liegt. Abhängig von einem Betrag zumindest einer der Spannungen werden beide Schalter gleichzeitig geöffnet.

Alternativ oder kumulativ zum Betrag der Spannung kann auch eine Veränderungsgeschwindigkeit der Spannung relevant sein und/oder ein Differential der Spannung berücksichtigt sein. Beispielsweise kann bei einem Absinken des Differentials über einen negativen Grenzwert auf einen raschen Spannungseinbruch geschlossen werden, der durch einen Fehler bedingt ist und zu einem Öffnen der Schalter führen kann.

Nach dem gleichzeitigen Öffnen der Schalter ist eine Stromversorgung über die Bodydioden möglich, da diese in Durchlassrichtung ein jeweiliges Potential der Bordnetzenergieversorgung mit dem Ausgang verbindet. Diejenige Bordnetzenergieversorgung, die das höhere Potential hat, bewirkt ein Stromfluss über die Bodydiode zu dem Verbraucher. Diejenige Bordnetzenergieversorgung, an der der Spannungseinbruch aufgetreten ist, hat das geringere Potential und von dieser fließt kein Strom über die Bodydiode in Durchlassrichtung zu dem gemeinsamen Knotenpunkt und den Verbraucher. Da die Bodydiode in Sperrrichtung betrieben ist, "sieht" die intakte Bordnetzenergieversorgung die defekte Bordnetzenergieversorgung nicht und es fließen keine Ausgleichsströme.

Nach dem gleichzeitigen Öffnen der Schalter wird der elektrische Zustand der beiden Bordnetzenergieversorgungen überprüft.

Abhängig von der Überprüfung wird dasjenige Bordnetz und diejenige Bordnetzenergieversorgung mit dem gemeinsamen Knotenpunkt und dem Ausgang über den Schalter verbunden, in der kein Fehler aufgetreten ist. Diejenige Bordnetzenergieversorgung und dasjenige Bordnetz, in der der Fehler aufgetreten ist, bleibt über einen geöffneten Schalter von dem Verbraucher und der anderen Bordnetzenergieversorgung getrennt.

Nachfolgend wird der Gegenstand anhand einer Ausführungsbeispiele zeigenden Zeichnung näher erläutert. In der Zeichnung zeigen:
- Fig. 1: ein Blockschaltbild gemäß einem Ausführungsbeispiel;
- Fig. 2a, b: Spannungsverläufe am gemeinsamen Knotenpunkt;
- Fig. 3a-f: Schaltzustände eines Kraftfahrzeugbordnetzschalters gemäß Ausführungsbeispielen.

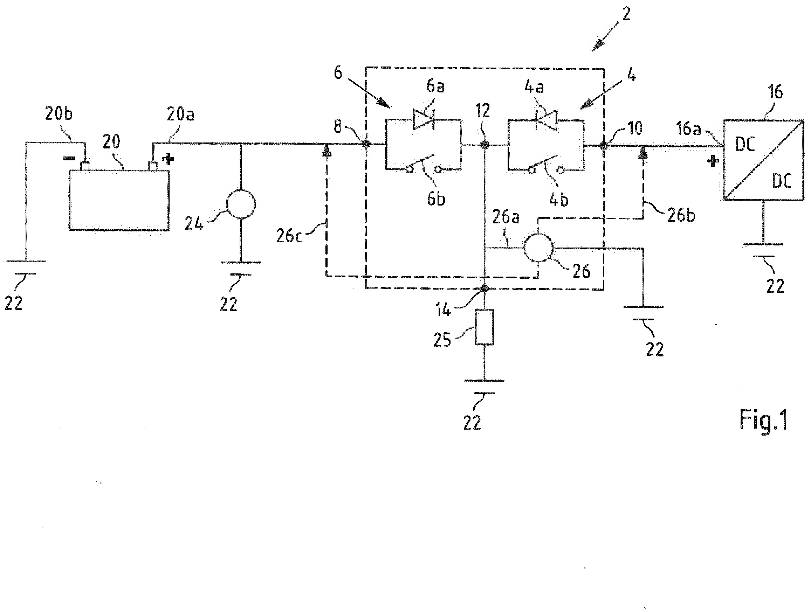

Fig. 1 zeigt einen Kraftfahrzeugbordnetzschalter 2 in einem Kraftfahrzeugbordnetz. Der Kraftfahrzeugbordnetzschalter 2 verfügt über zwei Schalter 4, 6. Der erste Schalter 4 ist über einen Eingangskontakt 10 mit einer ersten Bordnetzenergieversorgung 16 verbunden. Der zweite Schalter 6 ist über einen Eingangskontakt 8 mit einer zweiten Bordnetzenergieversorgung 20 verbunden. Die Schalter 4, 6 sind innerhalb des Kraftfahrzeugbordnetzschalters 2 über einen gemeinsamen Knotenpunkt 12 miteinander kurzgeschlossen. Der Knotenpunkt 12 ist mit einem Ausgangskontakt 14 verbunden.

Die Eingangskontakte 8, 10 sowie der Ausgangskontakt 14 können als Anschlusslaschen, Anschlussfahnen, Steckkontakte, Crimpkontakte, Anschlussbolzen, Schweißlaschen, Lötfahnen oder dergleichen gebildet sein.

Die erste Bordnetzenergieversorgung 16 ist beispielsweise ein DC/DC Wandler, der auf seinem High-Side-Potential 16a mit dem Eingangskontakt 10 verbunden ist.

Die zweite Bordnetzenergieversorgung 20 ist beispielsweise eine Batterie, die mit ihren B+ Potential 20a mit dem Eingangskontakt 8 verbunden ist und mit ihrem B-Kontakt 20b mit Masse 22 verbunden ist.

Die zweite Bordnetzenergieversorgung 20 versorgt beispielhaft ein Bordnetz 24. Die erste Bordnetzenergieversorgung 16 kann ebenfalls ein Bordnetz versorgen, dies ist jedoch nicht dargestellt.

An dem Ausgangskontakt 14 ist ein Verbraucher 25 angeschlossen. Der Verbraucher 25 ist beispielsweise ein sicherheitsrelevanter Verbraucher.

Die Schalter 4, 6 in dem Kraftfahrzeugbordnetzschalter 2 umfassen jeweils ein Schaltelement 4b, 6b sowie eine Bodydiode 4a, 6a. Die Schalter 4, 6 sind beispielsweise Halbleiterschalter, insbesondere Hochleistungshalbleiterschalter, beispielsweise MOSFETs, IGBTs oder dergleichen.

In der Fig. 1 ist zu erkennen, dass die Bodydioden 4a, 6a in Durchlassrichtung jeweils von einem Eingangskontakt 8, 10 in Richtung des gemeinsamen Knotenpunkts 12 geschaltet sind.

Die Schaltelemente 4b, 6b lassen sich über ein Schaltsignal (nicht gezeigt) ansteuern. Eine solche Ansteuerung kann beispielsweise über eine Überwachungsschaltung 26 erfolgen. Die Schalter 4a, 4b können beispielsweise Normally Opened (NO) sein und ein Öffnen-Signal kann ein Absinken eines Schaltsignalpegels sein. Die Schaltelemente 4b, 6b können auch Normally Closed (NC) sein und ein Öffnen-Signal ein Ansteigen eines Schaltsignalpegels sein.

Die Überwachungsschaltung 26 ist über eine Sensierungsleitung 26a mit dem gemeinsamen Knotenpunkt 12 verbunden und kann beispielsweise das Potential des gemeinsamen Knotenpunkts 12 gegenüber Masse 22 messen. Darüber hinaus ist die Überwachungsschaltung 26 mit Sensierungsleitungen 26b, c mit den jeweiligen Bordnetzen an den Bordnetzenergieversorgungen 16, 20 verbunden. Über die Sensierungsleitungen 26b, c lässt sich ein Zustand der jeweiligen Bordnetzes ermitteln, beispielsweise eine Impedanz, eine Impulsantwort, einen Widerstand gegenüber Masse oder dergleichen.

Mit Hilfe des gezeigten Kraftfahrzeugbordnetzschalters 2 ist es möglich, den sicherheitsrelevanten Verbraucher 25 redundant und dauerhaft mit zumindest einer der Bordnetzenergieversorgung 16, 20 zu verbinden, auch im Fehlerfall.

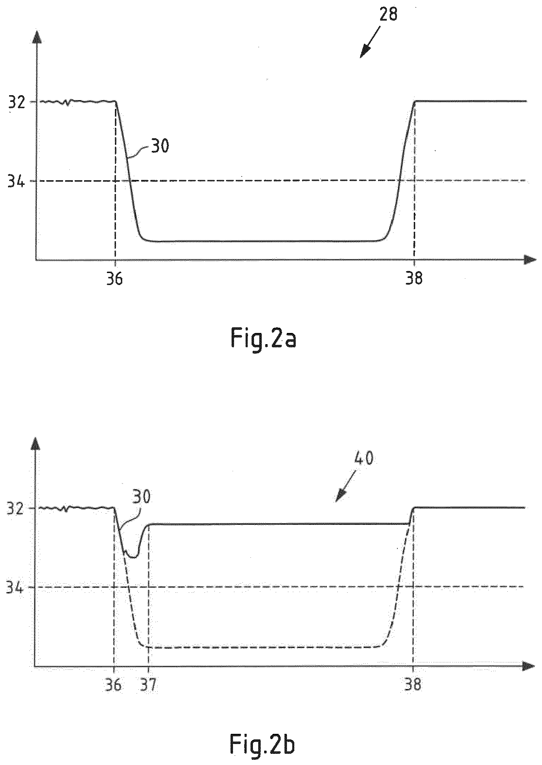

Ein solcher Fehlerfall ist in der Fig. 2a gezeigt. Fig. 2a zeigt beispielhaft und rein schematisch einen Spannungsverlauf 28 an dem gemeinsamen Knotenpunkt 12. Eine Normspannung 32 liegt an dem gemeinsamen Knotenpunkt 12 im Normalfall an. Im Normalfall sind die Schaltelemente 4b, 6b geschlossen. Die Normspannung 32 ergibt sich aus dem jeweils höheren Potential einer der beiden

Bordnetzenergieversorgungen 16, 20.

Im Falle eines Fehlers fällt die Flanke 30 in der Spannung 28 steil ab. Dies kann beispielsweise zum Zeitpunkt 36 erfolgen. Durch die steil abfallende Flanke 30 unterschreitet die Spannung 28 einen unteren Grenzwert 34. In herkömmlichen Schaltungen dauert es bis zum Zeitpunkt 38, bis die fehlerhafte Bordnetzenergieversorgung 16, 20 von dem gemeinsamen Knotenpunkt getrennt wurde. Der Zeitpunkt 38 kann dabei z.B. 40 bis 100ms nach dem Zeitpunkt 36 liegen. Der Abstand der Zeitpunkte 36, 38 liegt über der maximal erlaubten Dauer eines Spannungseinbruchs unter den Grenzwert 34 für einen sicherheitsrelevanten Verbraucher, z.B. 0,5ms.

Durch das Unterschreiten des unteren Grenzwerts 34 für mehr als 0,5ms, kann ein Fehler des sicherheitsrelevanten Verbrauchers 25 nicht mehr ausgeschlossen werden.

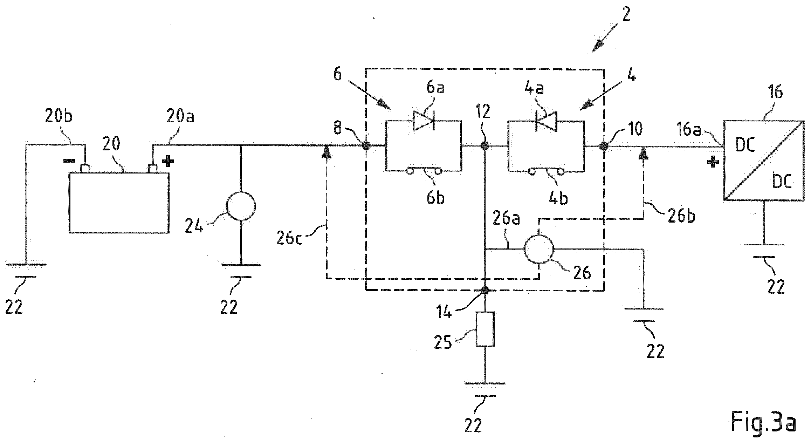

Abhilfe schafft ein gegenständlicher Kraftfahrzeugbordnetzschalter 2, bei dem ein Spannungsverlauf 40 gemäß Fig. 2b realisiert werden kann. Die Fig. 2b wird im Zusammenhang mit den Fig. 3a bis f beschrieben.

In der Fig. 3a ist zu erkennen, dass die Schaltelemente 4b, 6b geschlossen sind. Dies ist der Normalzustand. Die Normspannung 32 fließt von den Bordnetzenergieversorgungen 16, 20 über die Schaltelemente 4b, 6b und dem gemeinsamen Knotenpunkt 12 zu dem Verbraucher 25.

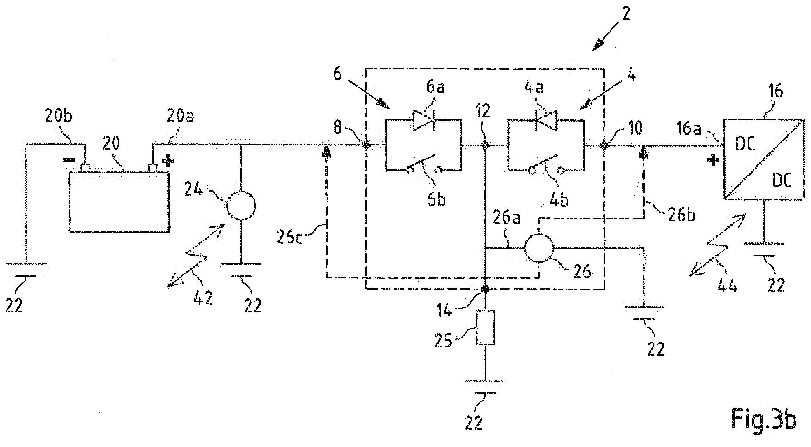

In der Fig. 3b ist gezeigt, dass ein Fehler, beispielsweise ein Kurzschluss 42, 44 auf Seiten einer der beiden Bordnetzenergieversorgungen 16, 20, ausgehend von den Eingangskontakten 8, 10 auftreten kann. In einem solchen Fall sinkt die Flanke 30 der Spannung 40 steil ab. Über die Überwachungsschaltung 26 kann diese steile Flanke 30 detektiert werden. Diese Detektion kann sehr schnell nach dem Zeitpunkt 36 zum Zeitpunkt 37 abgeschlossen sein. In diesem Fall werden beide Schaltelemente 4b, 6b durch die Überwachungsschaltung 26 unmittelbar geöffnet. Der Zeitpunkt 37 liegt insbesondere maximal 0,5ms nach dem Zeitpunkt 36. Da nicht bekannt ist, welcher der Kurzschlüsse 42, 44 aufgetreten ist, werden zunächst einmal beide Schaltelemente 4a, 6a geöffnet.

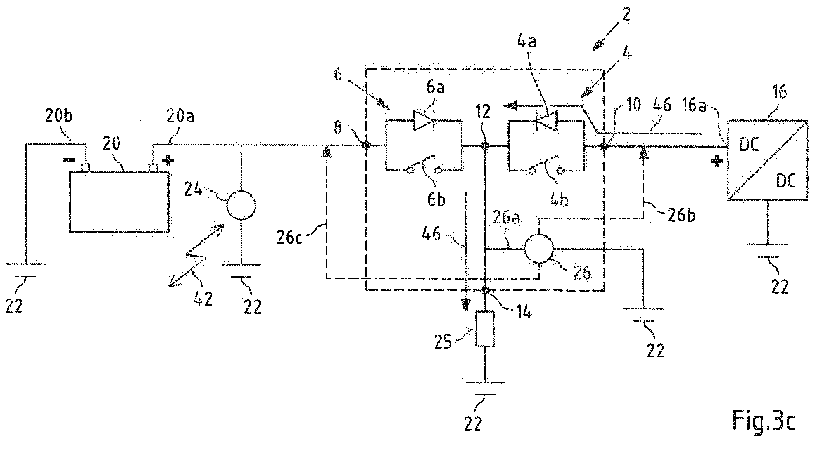

Fig. 3c zeigt ein Beispiel, bei dem ein Kurzschluss 42 auf Seiten der Bordnetzenergieversorgung 20 aufgetreten ist. Nachdem die beiden Schaltelemente 4b, 6b, wie in Fig. 3c gezeigt, durch die Überwachungsschaltung 26 geöffnet wurden, kann nach wie vor ein Stromfluss 46 von dem Pluspol 16a der Bordnetzenergieversorgung 16 über die Bodydiode 4a hin zu dem Verbraucher 25 fließen. Dies ist in der Fig. 2b gezeigt. Dort ist zu erkennen, dass nach der abfallenden Flanke 30 zum Zeitpunkt 37 sich die Spannung 40 wieder stabilisiert. Die Spannung 40 liegt 0,7 bis 1V unterhalb der Normspannung 32, was auf den Spannungsabfall über die Bodydiode 4a zurückzuführen ist.

In dem Zeitraum zwischen den Zeiten 36, 38 kann die Überwachungsschaltung 26 über die Sensierungsleitungen 26b, c in den jeweiligen Bordnetzen der Bordnetzenergieversorgungen 16, 20 messen und überprüfen, wo der Fehler liegt.

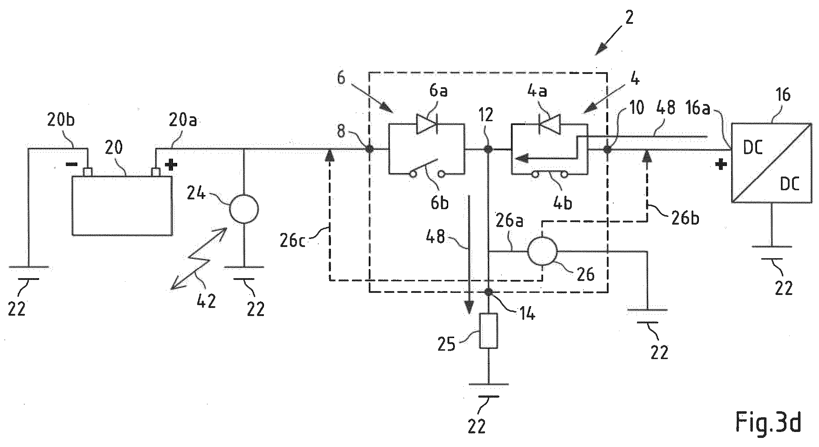

In der Fig. 3d ist gezeigt, dass der Fehler auf Seiten der Bordnetzenergieversorgung 20 sensiert wurde. In diesem Fall wird das Schaltelement 4b geschlossen. Wie in der Fig. 3d zu erkennen ist, erfolgt der Stromfluss 48 über das Schaltelement 4b.

In der Fig. 2b ist zu erkennen, dass dies zum Zeitpunkt 38, also wenn festgestellt wurde, wo der Fehler liegt, zu einem Anstieg der Spannung 40 auf Normspannung 32 führt. In der Fig. 2b ist zu erkennen, dass zu keiner Zeit die Spannung unter den Grenzwert 34 gefallen ist.

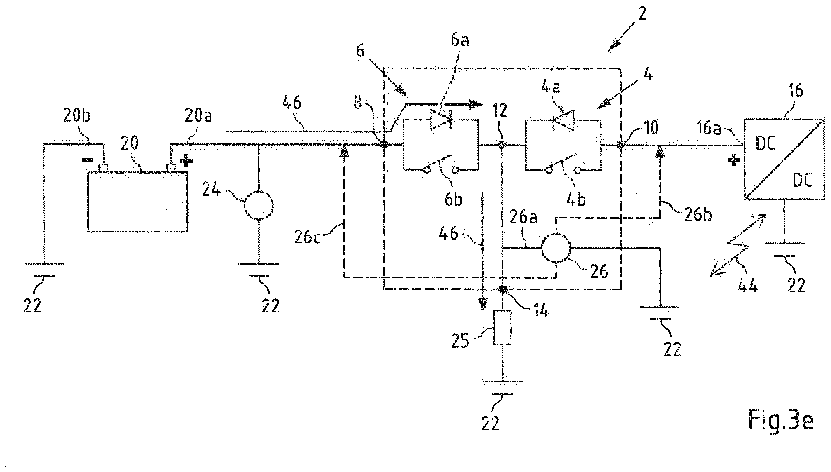

Fig. 3e zeigt einen Fall, in dem der Kurzschluss 44 auf Seiten der Bordnetzenergieversorgung 16 aufgetreten ist. Auch dieser Kurzschluss 44 führt zu einer abfallenden Flanke 30 und einem unmittelbaren Öffnen der Schaltelemente 4b, 6b. Da die Bordnetzenergieversorgung 20 nach wie vor fehlerfrei arbeitet, führt dies, wie in der Fig. 3e gezeigt, zu einem Stromfluss 46 über die Bodydiode 6a. Der Spannungsverlauf ist entsprechend der Fig. 2b.

Wie zu der Fig. 3c beschrieben, wird mit Hilfe der Überwachungsschaltung 26 in die beiden Bordnetze jenseits der Eingangskontakte 8, 10 gemessen und überprüft, auf welcher Seite der Fehler liegt.

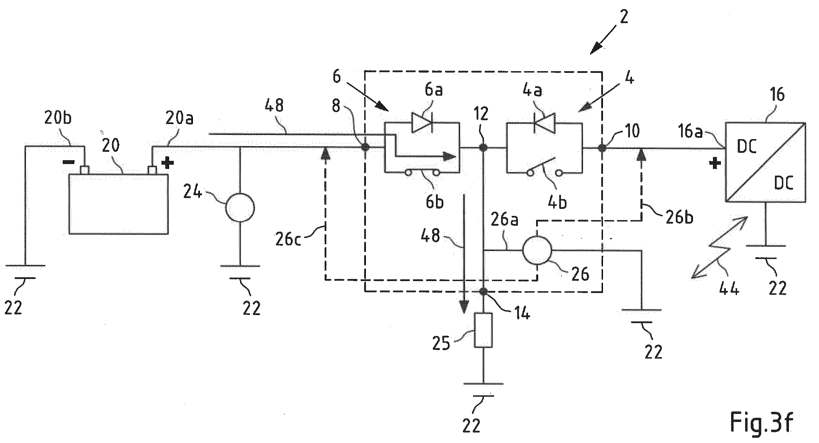

Liegt der Fehler auf Seiten der Bordnetzenergieversorgung 16, kann, wie in Fig. 3f gezeigt, das Schaltelement 6b wieder geschlossen werden. Dies ist der Zeitpunkt 38. Es erfolgt ein Stromfluss 48 von der Bordnetzenergieversorgung 20 über das Schaltelement 6b hin zu dem Verbraucher 25. Auch hier ist sichergestellt, dass zu keiner Zeit die Spannung unter dem Grenzwert 34 fällt.

Mit Hilfe der gezeigten Anordnung ist es möglich, eine redundante Bordnetzenergieversorgung so zu gestalten, dass ein Spannungseinbruch unter einen kritischen Grenzwert für sicherheitsrelevante Verbraucher vermieden wird.

## Patentansprüche

1. Kraftfahrzeugbordnetzschalter (2) mit
- zumindest zwei Eingängen für jeweils eine von zumindest zwei Bordnetzenergieversorgungen (16, 20),
- zumindest einem Ausgang für einen Verbraucher (25) des Kraftfahrzeugs,
- zumindest zwei Schaltern (4, 6), wobei
- ein erster Schalter (4) zwischen einem ersten der Eingänge und einem gemeinsamen Knotenpunkt (12) angeordnet ist, und
- ein zweiter Schalter (6) zwischen einem zweiten der Eingänge und dem gemeinsamen Knotenpunkt (12) angeordnet ist, und
- der Ausgang mit dem gemeinsamen Knotenpunkt (12) elektrisch verbunden ist, wobei
- die Schalter (4, 6) als Halbleiterschalter gebildet sind und jeweils mit ihren Bodydioden (4a, 6a) in Durchlassrichtung hin zum gemeinsamen Knotenpunkt (12) geschaltet sind,
**dadurch gekennzeichnet,**
- **dass** eine Überwachungsschaltung (26) eine erste Spannung an dem ersten Eingang und/oder eine zweite Spannung an dem zweiten Eingang und/oder eine Spannung an dem gemeinsamen Knotenpunkt (12) überwacht und dass die Überwachungsschaltung (26) abhängig von einem Betrag zumindest einer der überwachten Spannungen ein Öffnungssignal zum gleichzeitigen Öffnen beider Schalter (4, 6) bewirkt.

2. Kraftfahrzeugbordnetzschalter (2) nach Anspruch 1,
**dadurch gekennzeichnet,**
- **dass** die Überwachungsschaltung (26) bei einem Unterschreiten zumindest einer der Spannungen unter einen Grenzwert (34) das Öffnungssignal bewirkt.

3. Kraftfahrzeugbordnetzschalter (2) nach Anspruch 1 oder 2,
**dadurch gekennzeichnet,**
- **dass** die Überwachungsschaltung (26) bei einem Kurzschluss (44) an zumindest einem der Eingänge das Öffnungssignal bewirkt.

4. Kraftfahrzeugbordnetzschalter (2) nach einem der vorangehenden Ansprüche,
**dadurch gekennzeichnet,**
- **dass** die Überwachungsschaltung (26) zumindest eine der Spannung mit einem Vergleichspotential, insbesondere eine Massepotential, vergleicht.

5. Kraftfahrzeugbordnetzschalter (2) nach einem der vorangehenden Ansprüche,
**dadurch gekennzeichnet,**
- **dass** die Überwachungsschaltung (26) unmittelbar nach dem Bewirken des Öffnungssignals einen jeweiligen Zustand eines Teils des Bordnetzes an dem ersten Eingang und eines Teils des Bordnetzes an dem zweiten Eingang überprüft und abhängig von der Überprüfung ein Schließsignal für einen, bevorzugt nur den ersten oder nur den zweiten Schalter (4, 6) bewirkt.

6. Kraftfahrzeugbordnetzschalter (2) nach einem der vorangehenden Ansprüche,
**dadurch gekennzeichnet,**
- **dass** die Überwachungsschaltung (26) eine Netzimpedanz und/oder eine Spannung und/oder eine Impulsantwort an dem Teil des Bordnetzes an dem ersten Eingang und dem Teil des Bordnetzes an dem zweiten Eingang überprüft.

7. Kraftfahrzeugbordnetzschalter (2) nach einem der vorangehenden Ansprüche,
**dadurch gekennzeichnet,**
- **dass** die Halbleiterschalter derart dimensioniert sind, dass ein Spannungsabfall an einer jeweiligen Bodydiode (4a, 6a) nach dem Öffnen des Schalters kleiner 1V, bevorzugt kleiner 0,7V ist.

8. Kraftfahrzeugbordnetzschalter (2) nach einem der vorangehenden Ansprüche,
**dadurch gekennzeichnet,**
- **dass** die Überwachungsschaltung (26) innerhalb von 100ms, bevorzugt 40ms nach dem Öffnungssignal das Schließsignal bewirkt.

9. Kraftfahrzeugbordnetzschalter (2) nach einem der vorangehenden Ansprüche,
**dadurch gekennzeichnet,**
- **dass** nach dem Öffnen der Schalter (4, 6) der Ausgang über die jeweiligen Bodydioden (4a, 6a) mit dem ersten und dem zweiten Eingang leitend verbunden sind und die Bodydioden (4a, 6a) einen Stromfluss von dem jeweiligen Eingang zu dem Ausgang ermöglichen.

10. Kraftfahrzeugbordnetzschalter (2) nach einem der vorangehenden Ansprüche,
**dadurch gekennzeichnet,**
- **dass** nach dem Öffnen der Schalter (4, 6) der Ausgang über die jeweiligen Bodydioden (4a, 6a) mit dem ersten und dem zweiten Eingang leitend verbunden sind und die Bodydioden (4a, 6a) einen Stromfluss von dem Ausgang zu dem jeweiligen Eingang sperren.

11. Kraftfahrzeugbordnetzschalter (2) nach einem der vorangehenden Ansprüche,
**dadurch gekennzeichnet,**
- **dass** zumindest einer der Schalter (4, 6) mit einer variablen Schaltkennlinie geschaltet ist, insbesondere dass die Schaltkennlinie abhängig von einer Last am dem Ausgang ist.

12. Kraftfahrzeugbordnetzschalter (2) nach einem der vorangehenden Ansprüche,
**dadurch gekennzeichnet,**
- **dass** an dem Ausgang ein sicherheitsrelevanter Verbraucher (25) angeschlossen ist.

13. Kraftfahrzeugbordnetzschalter (2) nach einem der vorangehenden Ansprüche,
**dadurch gekennzeichnet,**
- **dass** der Ausgang mit dem gemeinsamen Knotenpunkt (12) kurzgeschlossen ist.

14. Kraftfahrzeugbordnetz mit
- einem Kraftfahrzeugbordnetzschalter (2) nach einem der vorangehenden Ansprüche,
- einer ersten mit dem ersten Eingang verbundenen Bordnetzenergieversorgung (16),
- einer zweiten mit dem zweiten Eingang verbundenen Bordnetzenergieversorgung (20), und
- einem mit dem Ausgang verbundenen sicherheitsrelevanten Verbraucher (25).

15. Verfahren zum Betreiben eines Kraftfahrzeugbordnetzschalters (2) nach einem der vorangehenden Ansprüche 1-13 bei dem
- eine erste Spannung an dem ersten Eingang und/oder eine zweite Spannung an dem zweiten Eingang und/oder eine Spannung (40) an dem gemeinsamen Knotenpunkt (12) überwacht wird und abhängig von einem Betrag zumindest einer der überwachten Spannungen beide Schalter (4, 6) gleichzeitig geöffnet werden,
- dass nach dem gleichzeitigen Öffnen der beiden Schalter (4, 6) die Bodydioden (4a, 6a) der beiden Schalter (4, 6) in Durchlassrichtung ein jeweiliges Potential der Bordnetzenergieversorgung (16, 20) mit dem Ausgang verbindet,
- dass nach dem gleichzeitigen Öffnen der beiden Schalter (4, 6) der elektrische Zustand der beiden Bordnetzenergieversorgungen (16, 20) überprüft wird und abhängig von der Überprüfung einer der beiden Schalter (4, 6) geschlossen wird.

## Claims

1. Motor vehicle on-board electrical network switch (2) with
- at least two inputs for respectively one of at least two on-board power supplies (16, 20),
- at least one output for a load (25) of the motor vehicle,
- at least two switches (4, 6), wherein
- a first switch (4) is disposed between a first of the inputs and a common node (12), and
- a second switch (6) disposed between a second of the inputs and the common node (12), and
- the output is electrically connected to the common node (12), wherein
- the switches (4, 6) are formed as semiconductor switches and are respectively connected with their body diodes (4a, 6a) in forward direction towards the common node (12),
**characterized in that**
- a monitoring circuit (26) monitors a first voltage at the first input and/or a second voltage at the second input and/or a voltage at the common node (12), and **in that** the monitoring circuit (26) triggers an opening signal for simultaneous opening of both switches (4, 6) as a function of an absolute value of at least one of the monitored voltages.

2. Motor vehicle on-board electrical network switch (2) according to claim 1,
**characterized in that**
- the monitoring circuit (26) triggers the opening signal when at least one of the voltages falls below a limit value (34).

3. Motor vehicle on-board electrical network switch (2) according to claim 1 or 2,
**characterized in that**
- the monitoring circuit (26) triggers the opening signal in the event of a short circuit (44) at at least one of the inputs.

4. Motor vehicle on-board electrical network switch (2) according to any one of the preceding claims,
**characterized in that**
- the monitoring circuit (26) compares at least one of the voltages with a comparison potential, in particular a ground potential.

5. Motor vehicle on-board electrical network switch (2) according to any one of the preceding claims,
**characterized in that**
- the monitoring circuit (26) evaluates a respective state of a part of the vehicle electrical network at the first input and of a part of the vehicle electrical network at the second input immediately after the opening signal is triggered and, depending on the evaluation, triggers a closing signal for one, preferably only the first or only the second switch (4, 6).

6. Motor vehicle on-board electrical network switch (2) according to any one of the preceding claims,
**characterized in**
- the monitoring circuit (26) evaluates a mains impedance and/or a voltage and/or an impulse response at the part of the vehicle electrical network at the first input and the part of the vehicle electrical network at the second input.

7. Motor vehicle on-board electrical network switch (2) according to any one of the preceding claims,
**characterized in that**
- the semiconductor switches are dimensioned in such a way that a voltage drop at a respective body diode (4a, 6a) after the switch is opened is less than 1V, preferably less than 0.7V.

8. Motor vehicle on-board electrical network switch (2) according to any one of the preceding claims,
**characterized in that**
- the monitoring circuit (26) triggers the closing signal within 100ms, preferably 40ms, after the opening signal.

9. Motor vehicle on-board electrical network switch (2) according to any one of the preceding claims,
**characterized in that**
- after opening of the switches (4, 6), the output is conductively connected to the first and second inputs via the respective body diodes (4a, 6a), and the body diodes (4a, 6a) enable a current flow from the respective input to the output.

10. Motor vehicle on-board electrical network switch (2) according to any one of the preceding claims,
**characterized in that**
- after opening of the switches (4, 6), the output is conductively connected to the first and the second input via the respective body diodes (4a, 6a) and the body diodes (4a, 6a) block a current flow from the output to the respective input.

11. Motor vehicle on-board electrical network switch (2) according to any one of the preceding claims,
**characterized in that**
- at least one of the switches (4, 6) is connected with a variable switching characteristic, in particular **in that** the switching characteristic is dependent on a load at the output.

12. Motor vehicle on-board electrical network switch (2) according to any one of the preceding claims,
**characterized in that**
- a safety-relevant load (25) is connected to the output.

13. Motor vehicle on-board electrical network switch (2) according to any one of the preceding claims,
**characterized in that**
- the output is short-circuited to the common node (12).

14. Motor vehicle electrical network with
- a motor vehicle on-board electrical network switch (2) according to any one of the preceding claims,
- a first on-board electrical power supply (16) connected to the first input,
- a second on-board electrical power supply (20) connected to the second input and
- a safety-relevant load (25) connected to the output.

15. Method of operating a motor vehicle on-board electrical network switch (2) according to one of the preceding claims 1-13, wherein
- a first voltage at the first input and/or a second voltage at the second input and/or a voltage (40) at the common node (12) is monitored and, depending on an absolute value of at least one of the monitored voltages, both switches (4, 6) are opened simultaneously,
- wherein, after the simultaneous opening of the two switches (4, 6), the body diodes (4a, 6a) of the two switches (4, 6) connect a respective potential of the on-board power supplies (16, 20) to the output in the forward direction,
- wherein, after the simultaneous opening of the two switches (4, 6), the electrical state of the two on-board power supplies (16, 20) is evaluated and, depending on the evaluation, one of the two switches (4, 6) is closed.

## Revendications

1. Commutateur de réseau de bord (2) de véhicule automobile, avec au moins deux entrées pour respectivement un d'au moins deux
alimentations en énergie (16, 20) de réseau de bord,
au moins une sortie pour un consommateur (25) du véhicule automobile,
au moins deux commutateurs (4, 6), où
un premier commutateur (4) est disposé entre une première des entrées et un point nodal commun (12), et
un deuxième commutateur (6) est disposé entre une deuxième des entrées et le point nodal commun (12), et
la sortie est reliée électriquement au point nodal commun (12), où les commutateurs (4, 6) sont réalisés sous forme de commutateurs à semi-conducteurs et sont chacun commutés avec leurs diodes de corps (4a, 6a) dans le sens de passage vers le point nodal commun
(12),
**caractérisé en ce**
**qu'**un circuit de surveillance (26) surveille une première tension sur la première entrée et/ou une deuxième tension sur la deuxième entrée et/ou une tension au point nodal commun (12) et que le
circuit de surveillance (26) déclenche, en fonction d'une valeur d'au moins une des tensions surveillées, un signal d'ouverture pour une ouverture simultanée des deux commutateurs (4, 6).

2. Commutateur de réseau de bord de véhicule automobile (2) selon la revendication 1,
**caractérisé en ce**
**que** le circuit de surveillance (26) déclenche le signal d'ouverture lorsqu'au moins une des tensions passe en dessous d'une valeur limite (34).

3. Commutateur de réseau de bord de véhicule automobile (2) selon la revendication 1 ou 2,
**caractérisé en ce**
**que** le circuit de surveillance (26) déclenche le signal d'ouverture en cas de court-circuit (44) sur au moins une des entrées.

4. Commutateur de réseau de bord (2) de véhicule automobile selon l'une des revendications précédentes,
**caractérisé en ce**
**que** le circuit de surveillance (26) compare au moins l'une des tensions à un potentiel de référence, en particulier un potentiel de masse.

5. Commutateur de réseau de bord (2) de véhicule automobile selon l'une des revendications précédentes,
**caractérisé en ce**
**que** le circuit de surveillance (26) vérifie, immédiatement après avoir déclenché le signal d'ouverture, un état respectif d'une partie du réseau de bord au niveau de la première entrée et d'une partie du réseau de bord au niveau de la deuxième entrée et, en fonction de la vérification, déclenche un signal de fermeture pour un, de préférence uniquement le premier ou uniquement le deuxième, commutateur (4, 6).

6. Commutateur de réseau de bord (2) de véhicule automobile selon l'une des revendications précédentes,
**caractérisé en ce**
**que** le circuit de surveillance (26) vérifie une impédance de réseau et/ou une tension et/ou une réponse impulsionnelle sur la partie du réseau de bord à la première entrée et sur la partie du réseau de bord à la deuxième entrée.

7. Commutateur de réseau de bord (2) de véhicule automobile selon l'une des revendications précédentes, **caractérisé en ce**
**que** les commutateurs à semi-conducteurs sont dimensionnés de telle sorte qu'une chute de tension au niveau d'une diode de corps respective (4a, 6a) après l'ouverture de le commutateur est inférieure à 1 V, de préférence inférieure à 0,7 V.

8. Commutateur de réseau de bord (2) de véhicule automobile selon l'une des revendications précédentes,
**caractérisé en ce**
**que** le circuit de surveillance (26) déclenche le signal de fermeture dans 100 ms, de préférence dans 40 ms après le signal d'ouverture.

9. Commutateur de réseau de bord (2) de véhicule automobile selon l'une des revendications précédentes, **caractérisé en ce**
**qu'**après l'ouverture des commutateurs (4, 6), la sortie est reliée de manière conductrice à la première et à la deuxième entrée via les diodes de corps (4a, 6a) respectives et les diodes de corps (4a, 6a) permettent un passage de courant de l'entrée respective vers la sortie.

10. Commutateur de réseau de bord (2) pour véhicule automobile selon l'une des revendications précédentes, **caractérisé en ce**
- **qu'**après l'ouverture des commutateurs (4, 6), la sortie est reliée de manière conductrice à la première et à la deuxième entrée via les diodes de corps (4a, 6a) respectives et que les diodes de corps (4a, 6a) bloquent un flux de courant de la sortie vers l'entrée respective.

11. Commutateur de réseau de bord de véhicule automobile (2) selon l'une des revendications précédentes,
**caractérisé en ce**
**qu'**au moins l'un des commutateurs (4, 6) est commuté avec une caractéristique de commutation variable, en particulier que la caractéristique de commutation dépend d'une charge sur
la sortie.

12. Commutateur de réseau de bord de véhicule automobile (2) selon l'une des revendications précédentes, **caractérisé en ce**
**qu'**un consommateur (25) important pour la sécurité est raccordé à la sortie.

13. Commutateur de réseau de bord de véhicule automobile (2) selon l'une des revendications précédentes,
**caractérisé en ce**
**que** la sortie est court-circuitée avec le point nodal commun (12).

14. Réseau de bord de véhicule automobile comprenant
un commutateur de réseau de bord de véhicule automobile (2) selon l'une des revendications précédentes,
une première alimentation en énergie de réseau de bord (16) reliée à la première entrée,
une deuxième alimentation en énergie de réseau de bord (20) reliée à la deuxième entrée (20), et
un consommateur (25) important pour la sécurité relié à la sortie.

15. Méthode pour faire fonctionner un commutateur de réseau de bord (2) d'un véhicule automobile selon l'une des revendications 1 à 13, dans lequel
- une première tension à la première entrée et/ou une deuxième tension à la deuxième entrée et/ou une tension (40) au point nodal commun (12) est surveillée et, en fonction d'une valeur d'au moins une des tensions surveillées, les deux commutateurs (4, 6) sont ouverts simultanément,
- qu'après l'ouverture simultanée des deux commutateurs (4, 6), les diodes de corps (4a, 6a) des deux commutateurs (4, 6) relient, dans le sens de conduction, un potentiel respectif de l'alimentation électrique de réseau de bord (16, 20) à la sortie,
qu'après l'ouverture simultanée des deux commutateurs (4, 6), l'état électrique des deux alimentations électriques du réseau de bord (16, 20) est contrôlé et
en fonction du contrôle, l'un des deux commutateurs (4, 6) est fermé.
